# EUROPÄISCHE PATENTSCHRIFT

(11) **EP 1 611 664 B1**
(45) Veröffentlichungstag und Bekanntmachung des Hinweises auf die Patenterteilung: **16.02.2011**
(21) Anmeldenummer: 03789136.3
(22) Anmeldetag: 04.12.2003
(51) Int. Cl.: H02K 41/02, H02K 41/03, E05F 15/18

(54) **LINEARANTRIEB FÜR EINE SCHIEBETÜR**
LINEAR DRIVE FOR A SLIDING DOOR
ENTRAINEMENT LINEAIRE POUR PORTE COULISSANTE

(30) Priorität: 09.12.2002 DE 10257579
(43) Veröffentlichungstag der Anmeldung: 04.01.2006
(73) Patentinhaber: Dorma GmbH + Co. KG, 58256 Ennepetal (DE)
(72) Erfinder: FINKE, Andreas, 58285 Gevelsberg (DE)
(86) Internationale Anmeldenummer: PCT/EP2003/013735
(87) Internationale Veröffentlichungsnummer: WO 2004/054075

(56) Entgegenhaltungen:
- WO-A-94/26020
- DE-A- 10 150 520
- PATENT ABSTRACTS OF JAPAN vol. 2000, no. 26, 1. Juli 2002 (2002-07-01) -& JP 2001 268885 A (MATSUSHITA ELECTRIC WORKS LTD), 28. September 2001 (2001-09-28)

## Beschreibung

Die Erfindung betrifft einen Linearantrieb, insbesondere für eine Schiebetür oder dergleichen.

Linearantriebe sind für Schiebetüren bekannt. Durch die in dem Linearantrieb vorhandenen Spulen wird auf Magnete eingewirkt, um die Schiebetür zu öffnen bzw. zu schließen. Dabei müssen die Spulen alternierend polarisiert werden, um entsprechende Kräfte auf die Magnete zum Öffnen und Schließen der Schiebetür auszuüben. Diese alternierende Polarisierung ist aber recht schwierig zu realisieren, da insbesondere bei einer Vielzahl von Spulen ein erhöhter Verdrahtungs-, Schaltungs- und Steuerungsaufwand erforderlich ist.

Die DE 101 50 520 A1 offenbart einen Linearantrieb gemäß Präambel des Anspruchs 1.

In der EP 0 671 071 B1 wird ein Linearantrieb für eine Schiebetür beschrieben. Bei diesem Antrieb befindet sich ein stationärer Langstator oberhalb des beweglichen Flügels. Die einzelnen Spulen sind dabei über die Gesamtlänge des Stators verteilt und zwar in gleichmäßigem Abstand, wobei das Joch des Stators aus Stäben besteht, die quer zu einem längs angeordneten Jochteil gehören. Die zu dem Flügel weisende Seite der quer angeordneten Jochsegmente wird durch eine ferromagnetische Platte mit darauf angeordneten Distanzstreifen angeschlossen. Innerhalb des beweglichen Flügels befinden sich Dauermagnete. Wird der bewegliche Flügel mit der vorbeschriebenen Platte in Verbindung gebracht, so hängt der Flügel aufgrund der magnetischen Kraft der Dauermagnete an dem Stator. Dadurch, dass am Ende und am Anfang des verschiebbaren Flügels Distanzrollen vorhanden sind, befindet sich zwischen den Dauermagneten und den Abstandsleisten bzw. der Platte ein definierter Luftspalt. Die Rollen haben die Aufgabe, die Schließbewegung des Flügels ausführen zu können. Gleichzeitig sind sie für eine konstante Beabstandung der Dauermagnete zu dem Stator notwendig. Bei einer Bestromung der Spulen wird das dadurch erzeugte Magnetfeld innerhalb des Stators weitergeschaltet, so dass eine Fortbewegung des angehängten Flügels möglich ist.

Es ist daher Aufgabe der vorliegenden Erfindung, einen Linearantrieb zu schaffen, bei dem der Montageaufwand bei der Verdrahtung der Spulen erheblich reduziert werden kann.

Diese Aufgabe wird durch die im Patentanspruch 1 angegebenen Merkmale gelöst. Vorteilhafte Weiterbildungen ergeben sich aus den Unteransprüchen.

Die einzelnen Spulen weisen sowohl für den Anfang der Wicklung als auch für das Ende der Wicklung Anschlussfahnen auf. Diese Anschlussfahnen stehen über dem Spulenkörper vor. Die Wicklungen haben alle den gleichen Wickelsinn.

Dadurch, dass die Anschlussfahnen der einen Spule bezüglich ihrer Lage zu den Anschlussfahnen einer anderen Spule derart unterschiedlich ausgerichtet sind, dass die Anschlussfahnen alternierend gegeneinander um 90° verdreht sind, kann auf einfache Weise eine alternierende Polarisierung der Spulen erreicht werden. Denn wenn alle in die gleiche Richtung weisenden Anschlussfahnen an den gleichen Leiter angeschlossen werden, wird automatisch die richtige Polarisierung erreicht, ohne dass es bei der Verdrahtung zu Verwechslungen oder Fehlschaltungen kommen kann. Dies erhöht die Montagesicherheit und hilft, Fehler bei der Verdrahtung auszuschließen. Außerdem wird durch die jeweils um 90° verdrehte Anordnung der einzelnen Spulen die Verbindung der einzelnen Spulen mit einer Stromquelle vereinfacht und Herstellungs- und Montagefehler werden weitgehend ausgeschlossen.

Besonders günstig ist eine Anordnung, bei der nach einer bevorzugten Ausführungsform ein Teil der Anschlussfahnen nach oben und ein anderer Teil der Anschlussfahnen nach außen zeigt. Aufgrund dieser Ausgestaltung kann in einfacher Weise eine Verbindung mit einer Stromquelle erfolgen.

Die Spulen sind in einem Spulenhalter gelagert.

Damit die erfindungsgemäß gewünschte Ausrichtung der Spulen in einfacher Weise realisiert werden kann, sind nach einer bevorzugten Weiterbildung die Spulen in unterschiedlichen Stellungen in den Spulenhalter einsetzbar. Auf diese Weise kann die alternierende Anordnung der Spulen sehr leicht und einfach erzeugt werden.

Nach einer alternativen Ausführungsform können die Spulen auch um ihre Achse drehbar in dem Spulenhalter gehalten sein. Bei dieser Anordnung können die Spulen selbst im montierten Zustand durch einfaches Drehen in die gewünschte Lage gebracht werden. Dies vereinfacht die Montage in besonderer Weise.

Um die alternierend ausgerichteten Anschlussfahnen der Spulen mit Strom zu versorgen, ist eine Kontaktschiene vorgesehen, die mindestens zwei mit den Anschlussfahnen in Kontakt kommende Leiterbahnen aufweist. Eine solche Kontaktschiene ist auf die Anschlussfahnen aufschiebbar, so dass einfach durch das Aufschieben der Kontaktschiene auf die unterschiedlich ausgerichteten Anschlussfahnen die richtige Polarisierung erreicht wird.

Damit es beim Aufschieben der Kontaktschiene auf die Anschlussfahnen nicht zu Störungen oder Verhakungen kommen kann, ist nach einer vorteilhaften Weiterbildung vorgesehen, dass die Enden aller Anschlussfahnen in die gleiche Richtung weisen.

Weitere Merkmale und Vorteile der Erfindung ergeben sich aus der nachfolgenden Beschreibung bevorzugter Ausführungsbeispiele.

Es zeigen:
- Figur 1:: eine Gesamtansicht eines erfindungsgemäßen Linear- antriebes,
- Figur 2:: einen in Verbindung mit dem erfindungsgemäßen Line- arantrieb verwendeten Führungsschlitten zur Aufhän- gung einer Schiebetür,
- Figur 3:: einen bei dem erfindungsgemäßen Führungsschlitten verwendeten Halter in einer perspektivischen Ansicht,
- Figur 4:: eine Ausführungsvariante des Halters,
- Figuren 5 und 6:: verschiedene Ansichten des Halters nach Figur 4,
- Figur 7:: eine weitere Ausführungsvariante des Halters,
- Figur 8:: eine weitere Ausführungsvariante des Halters,
- Figur 9:: eine Ansicht des Führungsschlittens nach Figur 3 von oben,
- Figur 10:: die Halter gemäß Figur 3 in Verbindung mit einer Schiebetür,
- Figur 11:: die Halter nach Figur 4 mit einer zusätzlichen Höhen- einstellung,
- Figur 12:: eine Ausführungsvariante des Halters in Verbindung mit einer Schiebetür,
- Figur 13:: eine weitere Ausführungsvariante des Halters in Ver- bindung mit einer Schiebetür,
- Figur 14:: eine in Verbindung mit dem erfindungsgemäßen Linear- antrieb verwendete Tragschiene,
- Figuren 15 bis 17:: eine erste Ausführungsform einer Justiereinrichtung für eine Schiebetür,
- Figur 18:: eine in Verbindung mit dem erfindungsgemäßen Linear- antrieb verwendete Tragschiene nach einer anderen Ausführungsform,
- Figuren 19 bis 21:: eine zweite Ausführungsform einer Justiereinrichtung für die Schiebetür,
- Figur 22:: eine Ausführungsform der in dem erfindungsgemäßen Linearantrieb verwendeten Spulen,
- Figur 23:: eine Ansicht des erfindungsgemäßen Linearantriebes von unten und
- Figur 24:: ein Detail einer in Verbindung mit dem erfindungsge- mäßen Linearantrieb verwendeten Schiebetürstabilisie- rung.

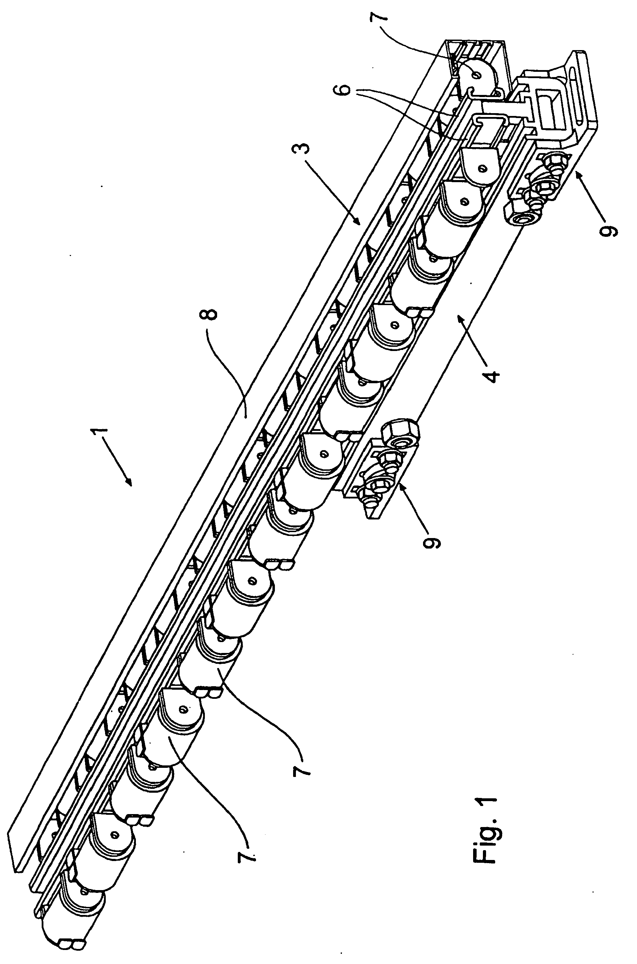

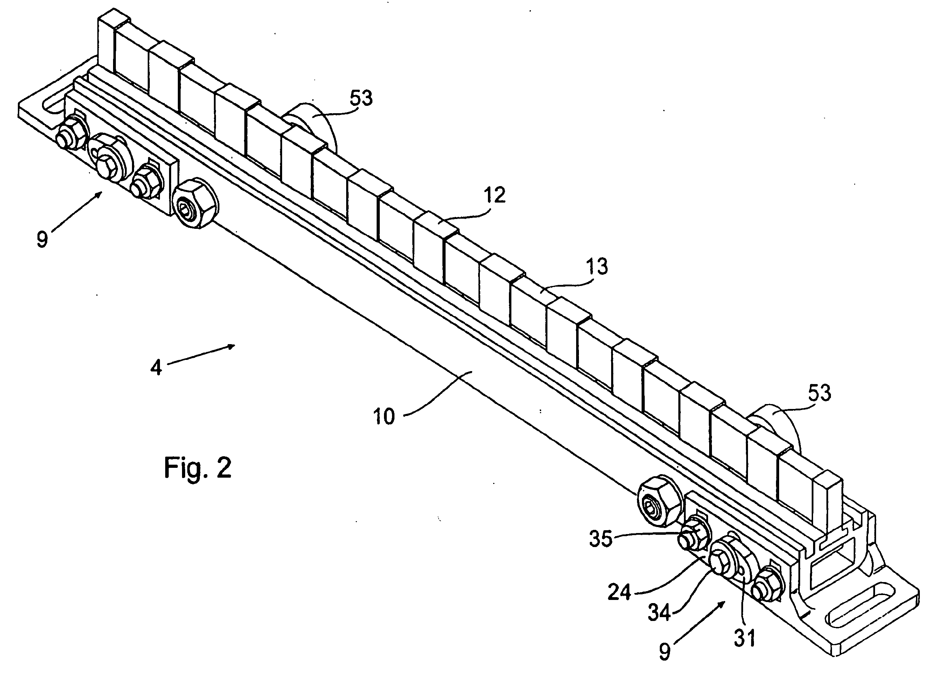

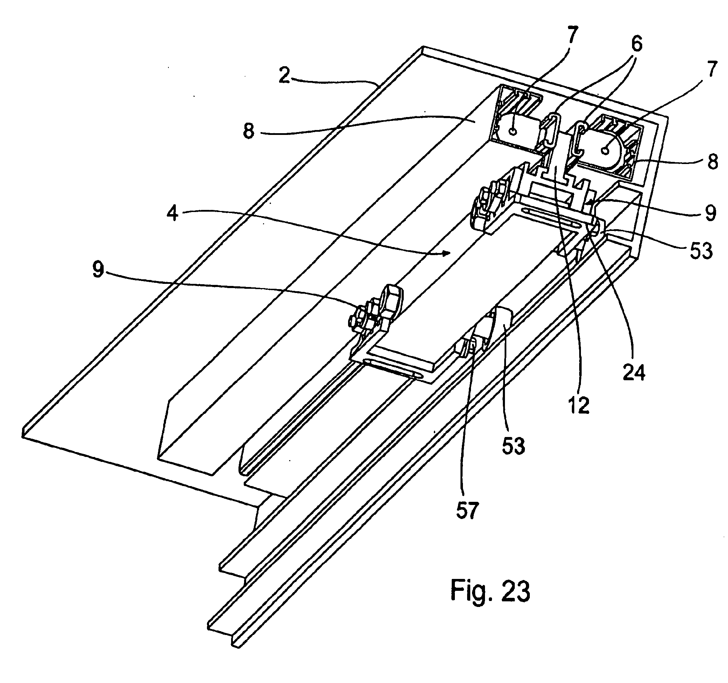

In Figur 1 ist eine Gesamtansicht eines erfindungsgemäßen Linearantriebes 1 dargestellt. Der Linearantrieb 1 ist in einer Halterung 2 (siehe Figur 23) untergebracht, welche an einem (nicht dargestellten) Gebäudeteil befestigt werden kann. Der Linearantrieb 1 selbst besteht aus einer in der Halterung 2 gelagerten stationären Führungsschiene 3 und einem in der Führungsschiene 3 verfahrbaren Führungsschlitten 4. An dem Führungsschlitten 4 ist eine in Längsrichtung der Führungsschiene 3 verfahrbare Schiebetür 5 gelagert. Der Führungsschlitten 4 ist in Figur 2 im Detail dargestellt.

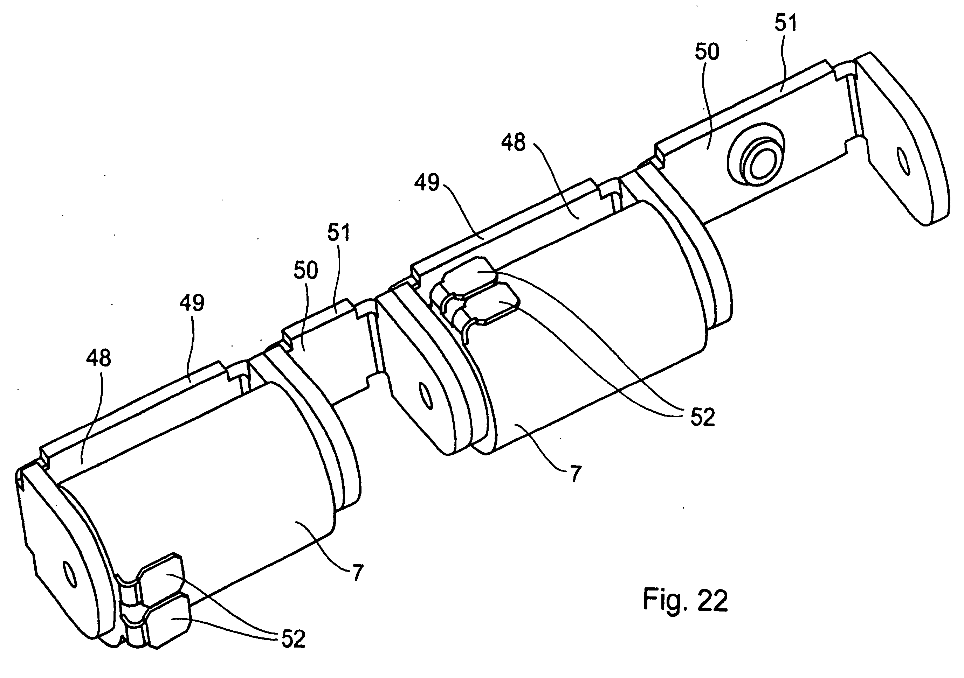

Die Führungsschiene 3 weist zwei C-förmige Profile 6 auf, die voneinander beabstandet sind und deren offene Seiten voneinander weg weisen. Zwischen den Profilen 6 befindet sich ein Teil des Führungsschlittens 4. In den voneinander wegweisenden offenen Seiten der C-förmigen Profile 6 sind Spulen 7 angeordnet, welche von den Stirnseiten der Profile 6 her in diese eingeschoben werden können. Die Spulen 7, die in Figur 22 im Detail dargestellt sind, sind mit Kontaktschienen 8 verbunden. An dem Führungsschlitten 4 ist weiterhin eine Justiereinrichtung 9 vorgesehen, mit deren Hilfe die mit dem Führungsschlitten 4 verbundene Schiebetür 5 ausgerichtet werden kann.

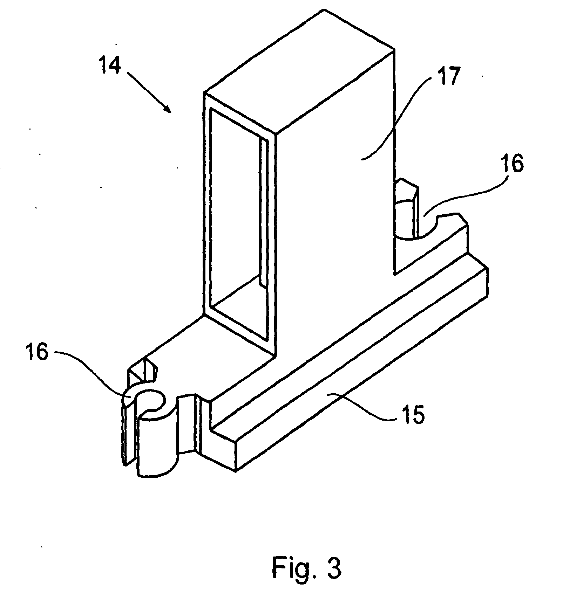

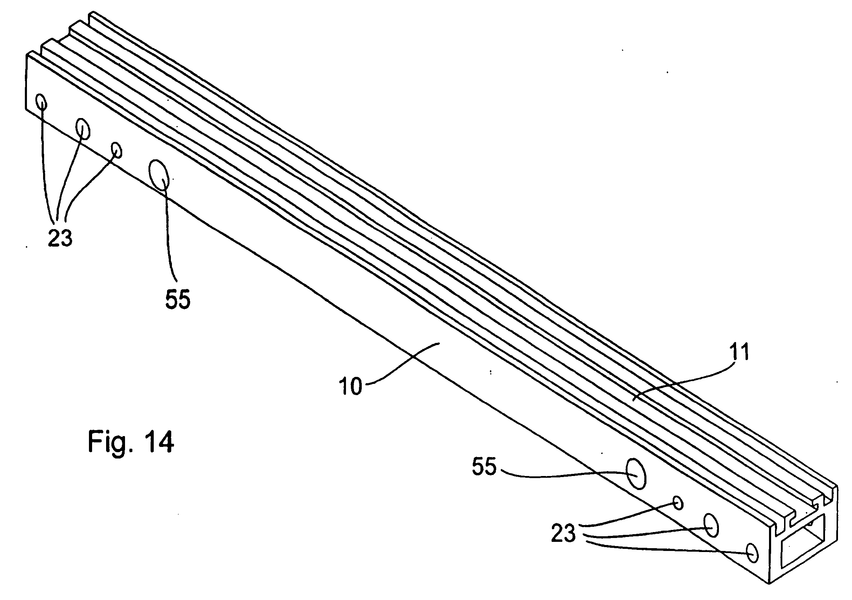

In Figur 2 ist der Führungsschlitten 4 im Detail dargestellt. Der Führungsschlitten 4 weist eine Tragschiene 10 auf, die als Hohlkastenprofil ausgebildet ist. Auf einer Oberseite des Hohlkastenprofiles ist eine mittig in Längsrichtung der Tragschiene 10 verlaufende und nach oben offene C-förmige Nut 11 (siehe Figur 14) ausgebildet. In diese Nut 11 ist ein Halteelement 12 einsetzbar, das von der Stirnseite her in die Tragschiene 10 eingeschoben werden kann. In diesem Halteelement 12 sind Magnete 13 aufgenommen, welche zusammen mit den an den C-förmigen Profilen 6 gelagerten Spulen 7 eine Halterung und einen Antrieb für die Schiebetür 5 bilden. Der Aufbau des Halteelementes 12 wird im Zusammenhang mit den Figuren 3 bis 8 noch näher erläutert.

Weiterhin ist jeweils an den Enden der Tragschiene 10 die bereits erwähnte Justiereinrichtung 9 vorgesehen, mit deren Hilfe die Schiebetür 5 bezüglich der Tragschiene 10 ausgerichtet werden kann. Diese Justiereinrichtung 9 wird später im Zusammenhang mit den Figuren 14 bis 17 noch genauer beschrieben werden.

Das in der nach oben offenen Nut 11 der Tragschiene 9 vorgesehene Halteelement 12 besteht aus einer Vielzahl von einzelnen Haltern 14. Ein solcher einzelner Halter 14 ist in Figur 3 dargestellt und besteht aus einem nichtmagnetischen Werkstoff, vorzugsweise aus Kunststoff. Der Halter 14 weist einen Sockel 15 auf, der in die C-förmige Nut 11 an der Tragschiene 10 eingeschoben werden kann. Der Sockel 15 ist an seinem vorderen und an seinem hinteren Ende mit je einem Verbindungselement 16 versehen, welches eine Verbindung mehrerer einzelner Halter 14 untereinander ermöglicht, um so das Halteelement 12 zu bilden. Im gezeigten Ausführungsbeispiel bestehen die komplementär ausgebildeten Verbindungselemente 16 aus einer teilkreisförmigen Rastaufnahme an dem einen Ende und einem als Teilkreisring ausgebildeten Rastvorsprung an dem anderen Ende. Der Rastvorsprung ist so in die Rastaufnahme eingesetzt, dass die einzelnen Halter 14 in der Ebene des Sockels 15 gegeneinander verschwenkbar sind, um Toleranzen ausgleichen zu können. Die Verbindungselemente 16 können entweder in vertikaler Richtung ineinander gesteckt oder in horizontaler Richtung ineinander geschoben werden. Um ein Ineinanderschieben in horizontaler Richtung zu ermöglichen, sind die Verbindungselemente 16 elastisch ausgebildet, so dass der Teilkreisring durch eine entsprechende keilförmig ausgebildete Einführungsrampe an der teilkreisförmigen Rastaufnahme zusammengedrückt wird und dann in die Rastaufnahme hineingleiten kann.

Von dem Sockel 15 erstreckt sich eine Aufnahme 17 nach oben, die zur Lagerung der Magnete 13 dient. Die Aufnahme 17 ist kürzer als der Sockel 15, so dass sich bei mehreren zusammengefügten Haltern 14 zwischen den einzelnen Aufnahmen 17 ein Abstand ergibt. Jede Aufnahme 17 weist weiterhin zwei nutförmige Taschen 18 auf, die auf entgegengesetzten Seiten der Aufnahme 17 angeordnet sind. In diese nutförmigen Taschen 18 können die Magnete 13 so eingesteckt werden, dass sie den zwischen zwei Aufnahmen 17 vorhandenen Abstand überbrücken, wie die Figur 2 zeigt. Auf den Außenseiten der Aufnahmen 17 sind vertikal verlaufende Leisten 19 vorgesehen, die zur Führung der Halter 14 an den Innenseiten der Profile 6 dienen. Diese Leisten 19 weisen entweder einen geringen Luftspalt zu den Profilen 6 auf, z. B. 0,1 mm, oder liegen ohne einen Luftspalt direkt an den Profilen 6 an.

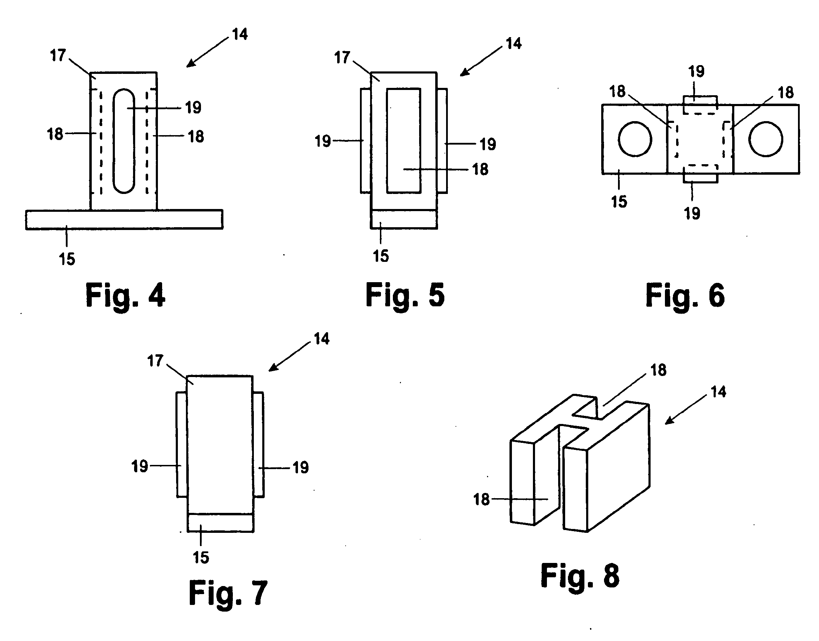

In den Figuren 7 und 8 sind Ausführungsvarianten des Halters 14 dargestellt. In Figur 7 ist ein Halter 14 dargestellt, der als Endstück in die Tragschiene 10 eingeschoben wird und der aus diesem Grunde nur einseitig mit einer Tasche 18 versehen ist, während die in Figur 7 gezeigte Seite eben, d. h. ohne Tasche, ausgebildet ist.

Beim Aufbau des Halteelementes 12 wird zunächst der in Figur 7 gezeigte Halter 14 als Anfangshalter in die Nut 11 der Tragschiene 10 eingeführt. Dann wird ein Magnet 13 mit seinem vorderen Ende in die Tasche 18 des ersten Halters 14 eingesetzt. Anschließend wird ein z. B. in Figur 4 gezeigter Halter 14 in die Nut 11 eingeschoben. Dabei nimmt die nach vorne weisende Tasche 18 das hintere Ende des ersten Magneten 13 auf. Nun wird wieder ein Magnet 13 mit seinem vorderen Ende in die hintere Tasche 18 des nächsten Halters 14 eingesetzt, darauf folgt ein weiterer Halter usw. bis die Tragschiene 10 vollständig mit Haltern 14 und Magneten 13 gefüllt ist. Als Abschluss wird dann wieder ein Halter 14 gemäß Figur 7 in die Tragschiene 10 eingesetzt. Die Tragschiene 12 weist nun die in Figur 2 dargestellte Ausgestaltung auf.

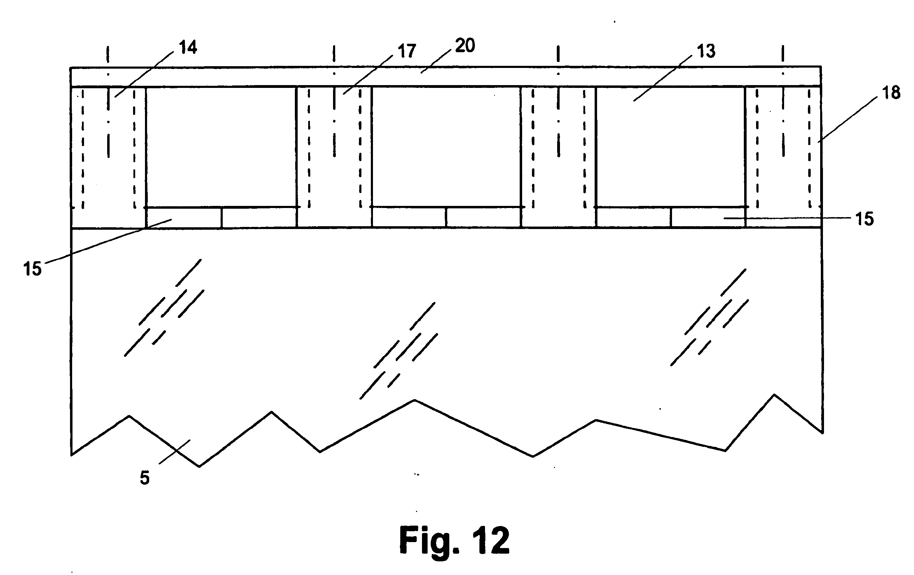

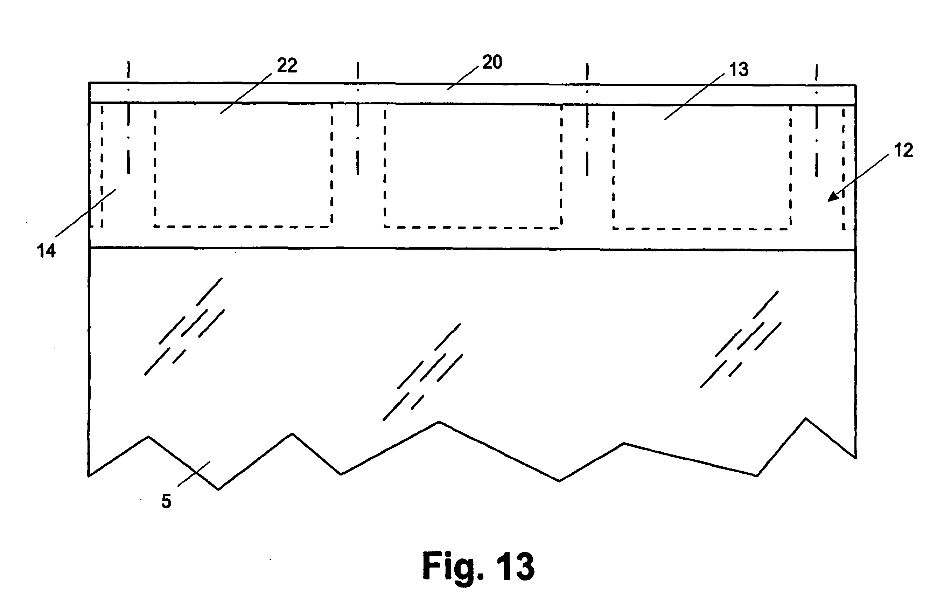

In Figur 8 ist ein gänzlich anderer Halter 14 gezeigt, bei dem der Sockel 15 aus Vereinfachungsgründen nicht dargestellt ist. Dieser Halter 14 ist in der Draufsicht H-förmig ausgebildet und die Taschen 18 sind nach oben offen. Somit ist es nicht erforderlich, beim Aufbau der Tragschiene 10 in der vorstehend erläuterten Art und Weise vorzugehen. Vielmehr können alle Halter 14 hintereinander in die Tragschiene 10 eingesetzt werden. Danach werden dann die Magnete 13 von oben in die Taschen 18 der Halter 14 eingeschoben und zum Schluss werden die nach oben offenen Taschen 18 mit einem Deckel 20 (siehe Figuren 12 und 13) verschlossen, der vorzugsweise mehrere Taschen 18 oder Einschübe 22 überdeckt.

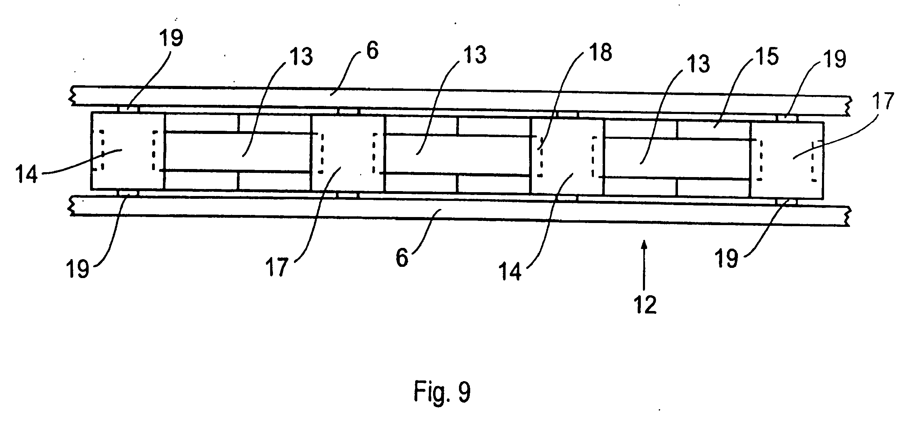

In Figur 9 ist eine Draufsicht auf das aus mehreren Haltern 14 und Magneten 13 bestehende Halteelement 12 gezeigt. Man erkennt, dass die Sockel 15 aneinander liegen, während die Aufnahmen 17 voneinander beabstandet sind. Dieser Abstand wird von den Magneten 13 überbrückt, die in den Taschen 18 der Aufnahmen 17 ruhen. Die seitlich an den Aufnahmen 17 angeordneten Leisten 19 liegen im Wesentlichen spielfrei an den Innenseiten der Profile 6 an und führen das Halteelement 12 in den Profilen 6.

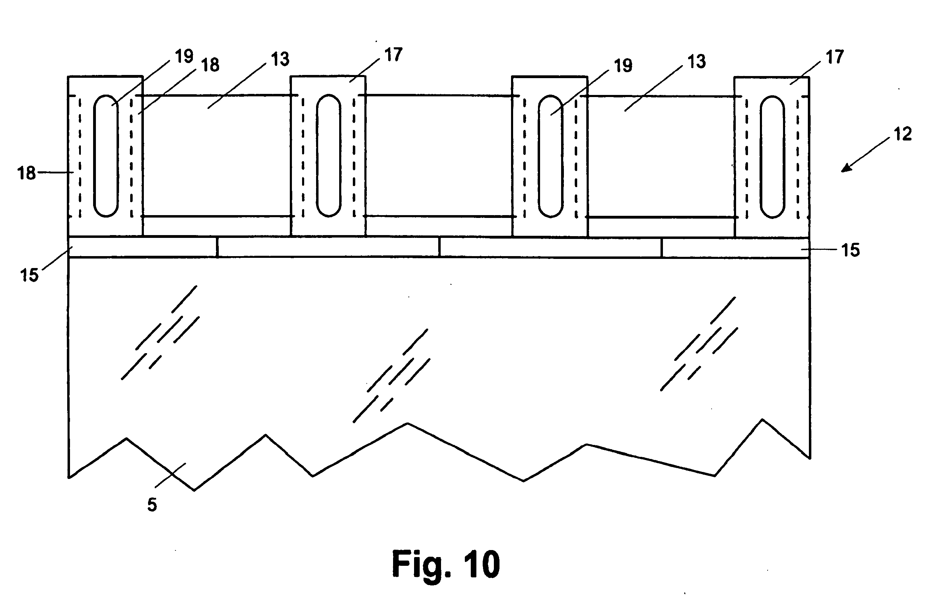

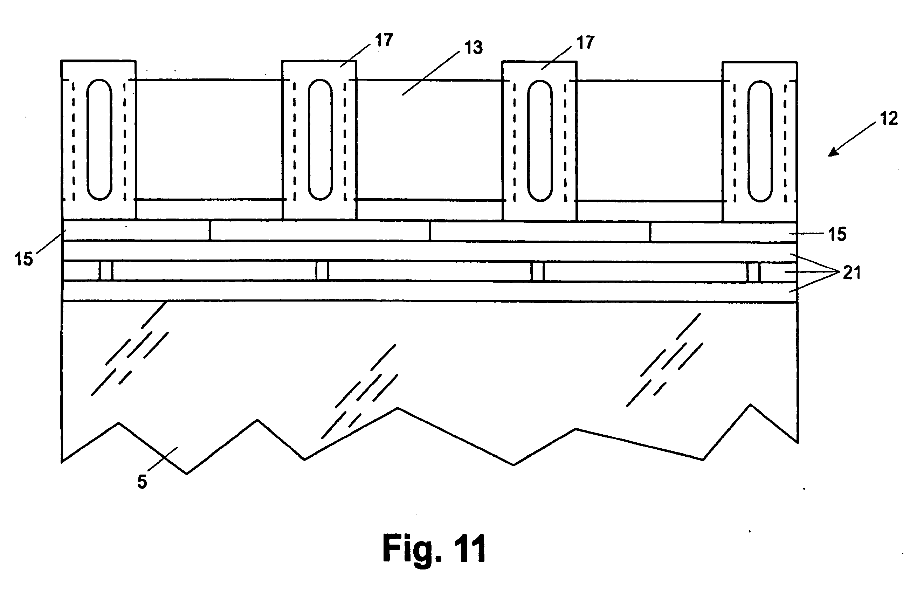

In Figur 10 ist eine Seitenansicht des aus mehreren Haltern 14 und Magneten 13 bestehenden Halteelementes 12 in Verbindung mit der Schiebetür 5 gezeigt. Das Halteelement 12 ist direkt mit der Schiebetür 5 verbunden. Wenn ein Höhenausgleich erforderlich ist, kann das Halteelement 12 auch unter Zwischenschaltung von Abstandsleisten 21 mit der Schiebetür 5 verbunden werden, wie in Figur 11 gezeigt ist.

In Figur 12 ist eine Seitenansicht auf das aus Haltern 14 gemäß Figur 8 bestehenden Halteelementes 12 in Verbindung mit der Schiebetür 5 gezeigt. Dabei sind die Magnete 13 von oben in die Taschen 18 eingeschoben und über den Deckel 20 gesichert. Der Deckel 20 ist über nicht näher dargestellte Verbindungselemente mit den Aufnahmen 17 verbunden.

In Figur 13 ist eine Seitenansicht einer weiteren Ausführungsform des Halteelementes 12 in Verbindung mit der Schiebetür 5 dargestellt. Das hier gezeigte Halteelement 12 besteht aus Haltern 14, von denen jeder mehrere nach oben offene Einschübe 22 aufweist, in welche die Magnete 13 eingesteckt werden können. Auch hier sind die Einschübe 22 mit einem Deckel 20 verschlossen. Ein weiterer Unterschied zu den in den Figuren 10 bis 12 gezeigten Haltern 14 besteht auch noch darin, dass bei den Haltern 14 nach den Figuren 10 bis 14 die Magnete 13 zur Seite hin, d. h. zu den Profilen 6 hin, freiliegen, während die Magnete 13 beim Halter 14 nach Figur 13 auch zur Seite hin von dem Halter 14 bzw. den Seitenwänden der Einschübe 22 umschlossen sind.

In den Figuren 14 bis 17 sind die Einzelteile einer vorzugsweise als Exzenterverstellung ausgebildeten Justiereinrichtung 9 dargestellt, mit deren Hilfe die mit der Tragschiene 10 verbundene Schiebetür 5 ausgerichtet werden kann. Zu diesem Zweck sind in den jeweiligen Endabschnitten der Tragschiene 10 eine Reihe von quer zur Längserstreckung der Tragschiene 10 in horizontaler Richtung verlaufenden Durchgangsbohrungen 23 angeordnet.

Zu der Justiereinrichtung 9 gehört weiterhin ein Schuh 24, der zwei an die Seitenflächen der Tragschiene 10 zur Anlage kommende, vertikal ausgerichtete Laschen 25 und eine die beiden Laschen 25 an deren einem Ende verbindende, horizontal ausgerichtete Befestigungsplatte 26 aufweist. In den Laschen 25 sind eine der Anzahl der Durchgangsbohrungen 23 in der Tragschiene 10 entsprechende Anzahl von Justierschlitzen 27 vorgesehen. Da im dargestellten Ausführungsbeispiel drei Durchgangsbohrungen 23 vorgesehen sind, sind folglich in den Laschen 25 auch drei Justierschlitze 27 angeordnet. Dabei ist die Anordnung der Justierschlitze 27 so getroffen, dass die beiden äußeren Justierschlitze 27 als vertikal verlaufende Langlöcher ausgebildet sind, während der mittlere Justierschlitz 27 eine Ausgestaltung in Form eines liegenden T aufweist. In der Befestigungsplatte 26 ist ein sich in Richtung der Durchgangsbohrungen 23 erstreckendes Langloch 28 angeordnet, das zur Aufnahme eines nicht gezeigten Verbindungselementes zur Befestigung der Schiebetür 5 dient.

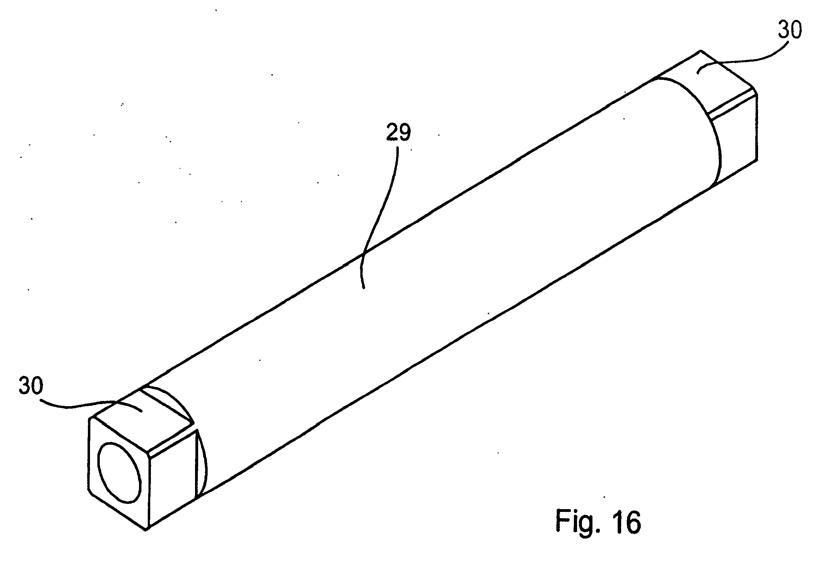

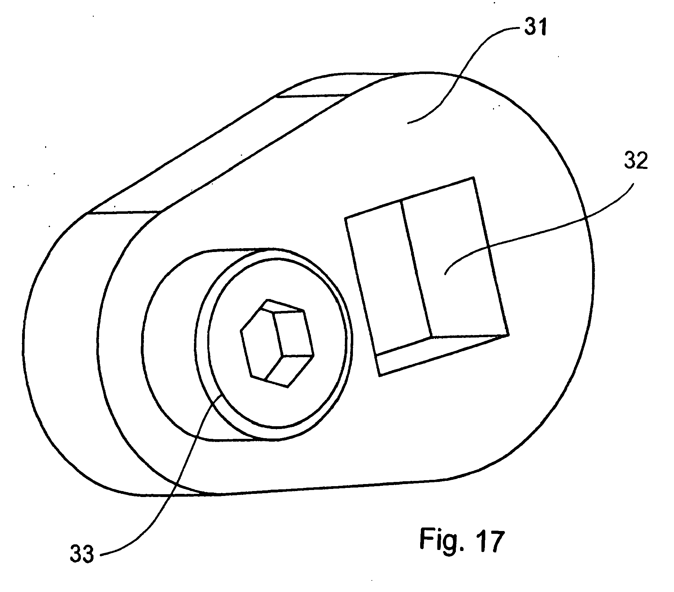

Zu der Justiereinrichtung 9 gehören weiterhin eine Welle 29, die in ihrem Mittelbereich einen kreisförmigen Querschnitt aufweist und an ihren beiden Enden als Vierkant 30 ausgebildet ist (vgl. Figur 16) sowie ein in Figur 17 gezeigter Schwenkarm 31. Der Schwenkarm 31 weist an seinem einen Ende eine Aufnahmeöffnung 32 für den Vierkant 30 der Welle 29 und an seinem anderen Ende einen Nocken 33 auf, der im vorliegenden Ausführungsbeispiel als Innensechskantschraube ausgebildet ist.

Die aus der Tragschiene 10, dem Schuh 24, der Welle 29 und dem Schwenkarm 31 bestehende und als Ganzes in Figur 2 gezeigte Justiereinrichtung 9 ist wie folgt aufgebaut:

Der Schuh 24 wird so auf die Tragschiene 10 aufgeschoben, dass die Durchgangsbohrungen 23 in der Tragschiene 10 mit den Justierschlitzen 27 fluchten. Dann wird die Welle 29 so durch den mittleren, als liegendes T ausgebildeten Justierschlitz 27 gesteckt, dass sie im Bereich eines vertikalen T-Astes liegt. Dabei ragen die an den beiden Enden der Welle 29 ausgebildeten Vierkante 30 über die Laschen 25 hinaus. Jetzt wird auf jeden Vierkant 30 je ein Schwenkarm 31 aufgesteckt und mit einer Halteschraube 34 so befestigt, dass der Nocken 33 nach einwärts zeigt und in den horizontalen Ast des liegenden T eingreift. Schließlich werden noch Sicherungsbolzen 35 eingesetzt, welche die beiden äußeren Justierschlitze 27 und die äußeren Durchgangsbohrungen 23 durchgreifen.

Durch eine Verdrehung der Welle 29 bzw. der an der Welle 29 befestigten Schwenkarme 31 kann nun die relative Lage des Schuhs 24 zur Tragschiene 10 verstellt werden, wodurch die Schiebetür 5 bezüglich ihrer Lage zum Führungsschlitten 4 justiert werden kann. Nach erfolgter Justage werden dann die Sicherungsbolzen 35 festgezogen, damit sich die einmal eingestellte Lage nicht mehr verändern kann.

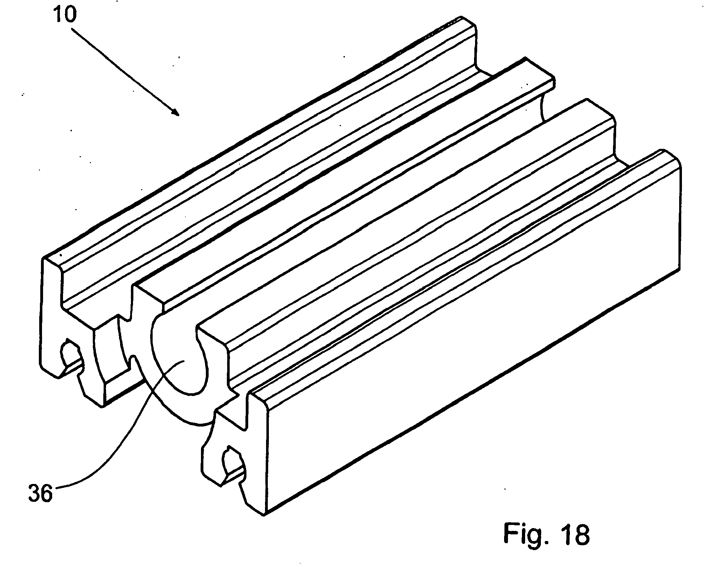

In der Figur 18 ist eine andere Ausführungsform der Tragschiene 10 dargestellt. Diese Tragschiene 10 weist eine mittig verlaufende, teilkreisförmige Längsnut 36 auf, in die der entsprechend ausgestaltete Sockel des Halters 14 eingeschoben werden kann.

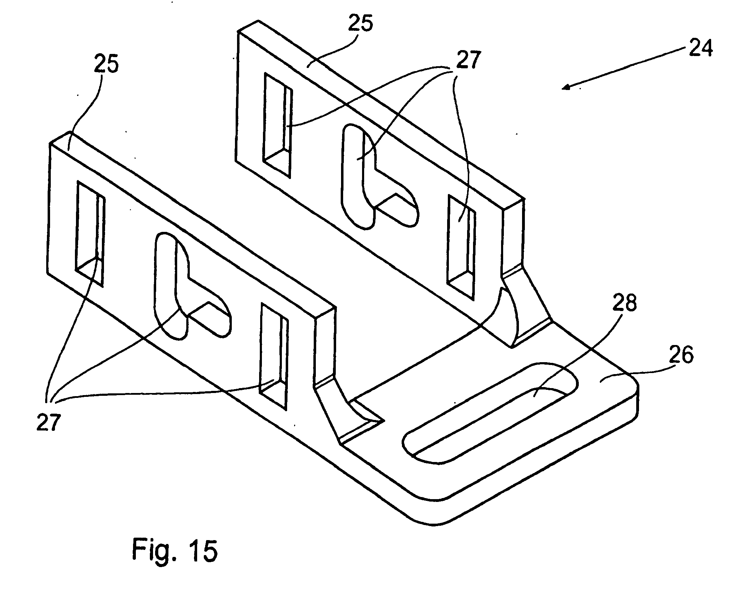

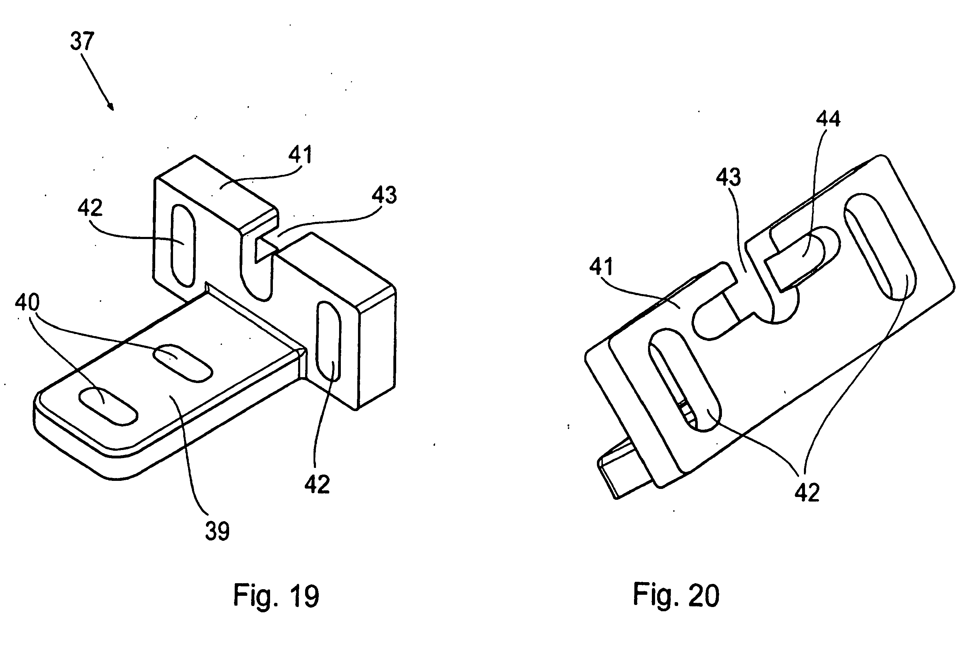

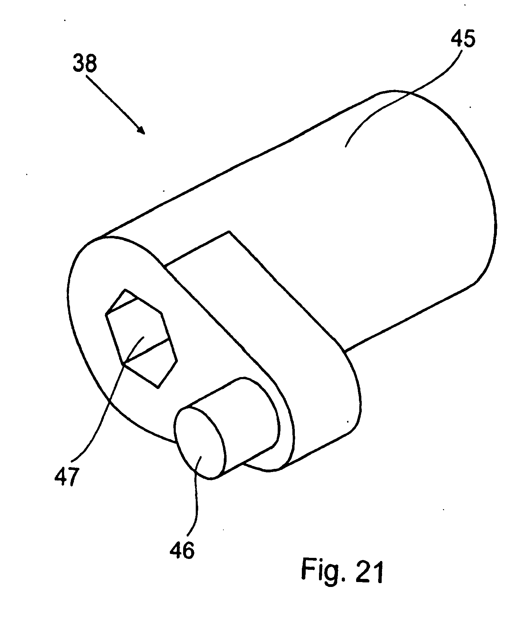

In den Figuren 19 bis 21 ist eine weitere Ausführungsform der ebenfalls vorzugsweise als Exzenterverstellung ausgebildeten Justiereinrichtung 9 dargestellt, die insbesondere mit der Tragschiene 10 nach Figur 18 verwendet werden kann. Diese Justiereinrichtung 9 ist nicht wie die Justiereinrichtung 9 nach den Figuren 15 bis 17 seitlich an der Tragschiene 10 angeordnet, sondern an der Stirnseite der Tragschiene 10. Die Justiereinrichtung 9 weist je einen an der Stirnseite der Tragschiene 10 anbringbaren L-förmigen Winkelträger 37 und eine zu jedem Winkelträger 37 gehörende Exzenterwelle 38 auf. Ein Schenkel 39 des Winkelträgers 37 weist zwei quer zu diesem Schenkel 39 verlaufende Langlöcher 40 auf, die zur Befestigung der an dem Winkelträger 37 anbringbaren Schiebetür 5 dienen. Ein anderer Schenkel 41 des Winkelträgers 37, der breiter ist als der Schenkel 39 und seitlich über diesen übersteht, weist im überstehenden Bereich ebenfalls zwei quer zu diesem Schenkel 41 verlaufende Langlöcher 42 auf, die zur Verbindung mit der Stirnseite der Tragschiene 10 dienen. Außerdem ist mittig zwischen den beiden Langlöchern 42 ein nach einer Seite hin offener Schlitz 43 vorgesehen, der sich in der gleichen Richtung erstreckt wie die Langlöcher 42. Auf der von dem Schenkel 39 abgewandten Seite ist in dem Schenkel 41 eine quer zum Schlitz 43 und zu den Langlöchern 42 verlaufende Aufnahmenut 44 angeordnet, welche den Schlitz 43 schneidet.

Die weiterhin zur Justiereinrichtung 9 gehörende Exzenterwelle 38 besteht aus einem Wellenstummel 45, an dessen einem Ende mittels eines Exzenterarmes ein nach außen vorstehender Nocken 46 angeordnet ist. In der Achse des Wellenstummels 45 ist eine Eingriffsöffnung 47 vorgesehen, die im dargestellten Ausführungsbeispiel als Innensechskant ausgebildet ist und dazu dient, mittels eines entsprechenden Werkzeuges, die Exzenterwelle 38 zu verstellen.

Die Justiereinrichtung 9 nach den Figuren 18 bis 21 wird wie folgt verwendet:

Der Wellenstummel 45 der Exzenterwelle 38 wird in die Längsnut 36 der Tragschiene 10 eingesteckt. Dann wird der Winkelträger 37 mit seinem Schenkel 41 so an die Tragschiene 10 angesetzt, dass der Nocken 46 in die Aufnahmenut 44 eingreifen kann. In dieser Stellung ist die Eingriffsöffnung 47 durch den Schlitz 43 erreichbar. Um die Tragschiene 10 bezüglich der Schiebetür 5 zu justieren, wird die Exzenterwelle 38 mittels eines Werkzeuges oder dergleichen verdreht. Dabei dreht sich der Wellenstummel 45 in der Längsnut 36 und der Nocken 46 gleitet in der Aufnahmenut 44. Nach erfolgter Justage werden dann noch nicht gezeigte und in den Langlöchern 42 angeordnete Befestigungsbolzen festgezogen und die einmal eingestellte Lage bleibt dauerhaft erhalten.

In Figur 22 sind die in Verbindung mit dem erfindungsgemäßen Linearantrieb 1 verwendeten Spulen 7 dargestellt. Die Spulen 7 sind in Spulenhaltern 48 gehalten. Die Spulenhalter 48 sind mit einer Basisplatte 49 versehen, mit denen sie in die C-förmigen Profile 6 eingeschoben werden können (vgl. Figur 1). Zwischen den Spulenhaltern 48 bzw. den Spulen 7 sind Abstandhalter 50 vorgesehen, die ebenfalls eine in die C-förmigen Profile 6 einsetzbare Grundplatte 51 aufweisen. Die Abstandhalter 50 sind unterschiedlich lang ausgebildet, um die Abstände der Spulen 7 untereinander variieren zu können. Die Spulen 7 bzw. ihre Spulenhalter 48 können natür lich auch ohne zwischengeschaltete Abstandhalter 50 direkt aneinander anliegen. Außerdem sind an den Spulen 7 Anschlussfahnen 52 zur elektrischen Verbindung der Spulen 7 vorgesehen.

Die Spulen 7 können entweder in unterschiedlichen Stellungen in die Spulenhalter 48 einsetzbar sein oder nach einer alternativen Ausführung auch um ihre Achse drehbar in den Spulenhaltern 48 aufgenommen sein, damit die Anschlussfahnen 52 je nach Stellung der Spule 7 in verschiedene Richtungen weisen. Bei dem in Figur 22 gezeigten Beispiel weisen die Anschlussfahnen 52 der einen Spule 7 zur Seite, während die Anschlussfahnen 52 der anderen Spule nach oben zeigen. Infolge dieser Anordnung mit vorzugsweise um 90° alternierend angeordneten Anschlussfahnen 52 ist es möglich, die Spulen 7 je nach Stellung ihrer Anschlussfahnen 52 beim Aufschieben der Kontaktschiene 8 unterschiedlich zu polarisieren. Damit es beim Aufschieben der Kontaktschiene 8 nicht zu Störungen kommen kann, weisen die Enden aller Anschlussfahnen 52 in die gleiche Richtung.

In Figur 23 ist der erfindungsgemäße Linearantrieb 1 im zusammengebauten Zustand dargestellt, lediglich die an den Schuhen 24 angebrachte Schiebetür 5 ist zur besseren Übersichtlichkeit weggelassen. Man erkennt, dass das aus einzelnen Haltern 14 und Magneten 13 bestehende Halteelement 12 nahezu spielfrei zwischen den beiden C-förmigen Profilen 6 angeordnet ist. In die Profile 6 sind auf deren Außenseite eine Reihe der Spulen 7 eingeschoben, die je nach Stellung ihrer Anschlussfahnen 52 mit den oberen oder mit den seitlichen in der Kontaktschiene 8 angeordneten Kontaktleitem verbunden sind. Dabei verbindet die Kontaktschiene zum einen die einzelnen Spulen 7 elektrisch untereinander und deckt zum anderen die Spulen 7 und die Spulenhalter 48 gegen äußere Einwirkungen ab. Es besteht somit ein Berührungsschutz und ein mechanischer Schutz. Die Schiebetür 5 wird allein über die von den Spulen 7 und den Magneten 13 erzeugte Kraft gehalten und je nach erzeugtem Magnetfeld vorwärts bzw. rückwärts bewegt.

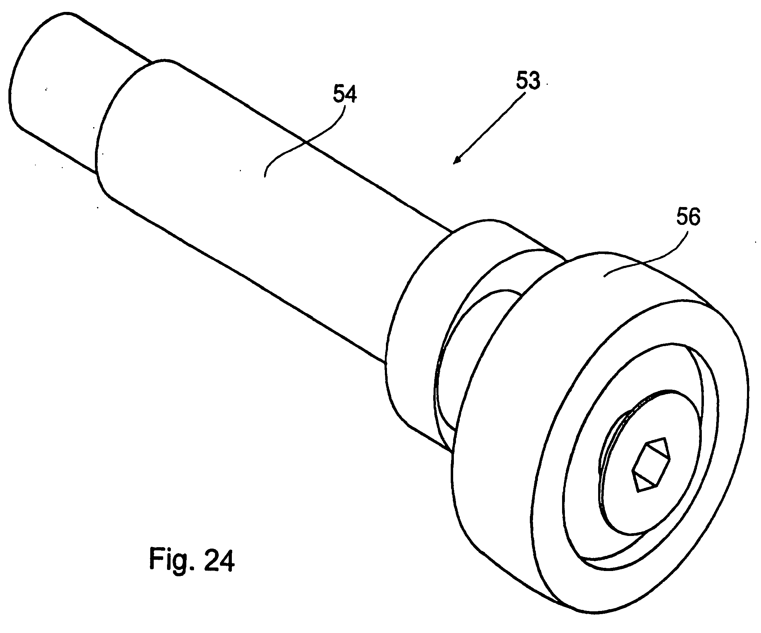

In der Figur 23 ist weiterhin erkennbar, dass an dem Führungsschlitten 4 im vorderen und im hinteren Bereich jeweils eine Stützrolle 53 angeordnet ist, die im Detail in Figur 24 dargestellt ist. Diese Stützrollen 53 stabilisieren die Schiebetür 5 beim Anfahren und Bremsen und verhindern so eine Schaukelbewegung der Schiebetür 5. Die Stützrollen 53 bestehen aus einer Lagerwelle 54, welche die Tragschiene 10 in einer Bohrung 55 (vgl. Figur 14) durchsetzt. An einem Ende der Lagerwelle 54 ist exzentrisch zur Wellenachse eine frei drehbare Rolle 56 angeordnet, die auf einer Führungsbahn 57 der Halterung 2 läuft (vgl. Figur 23). An dem anderen Ende der Lagerwelle 54 ist ein nicht dargestelltes Gewinde angeordnet, das zur Aufnahme einer Befestigungsschraube dient. Die Rolle 56 ist vorzugsweise lösbar an der Lagerwelle 54 angeordnet, um im Bedarfsfall eine leichte Auswechselung der Rolle 56 vornehmen zu können. Die Stützrollen 53 sind so angeordnet, dass beide Rollen 56 auf der gleichen Seite der Tragschiene 10 liegen. Infolge der exzentrischen Lagerung der Rolle 56 zur Wellenachse kann durch Drehung der Lagerwelle 54 die Rolle 56 in ihrer Lage verstellt und so exakt zu der Führungsbahn 57 ausgerichtet werden.

Es ist nicht erforderlich, dass die Stützrollen 54 während des gesamten Bewegungsvorganges der Schiebetür 4 auf der Führungsbahn 57 abrollen. Vielmehr können die Rollen 56 auch einen geringen Abstand von z. B. wenigen zehntel Millimetern von der Führungsbahn 57 aufweisen, der beim Anfahren und Abbremsen durch die Schaukelbewegung der Schiebetür 4 überwunden wird. Je nach gewähltem Abstand kann bereits eine kaum wahrnehmbare Schaukelbewegung ausreichen, um den Abstand zu überwinden. Somit würden die Rollen 56 nur in der Beschleunigungs- bzw. Abbremsphase auf der Führungsbahn 57 abrollen, während sie während der normalen Bewegung der Schiebetür 4 einen Abstand zu der Führungsbahn 57 aufweisen und somit auch keine zusätzliche Reibung verursachen.

Es ist auch möglich, dass die Stützrollen 54 stets mitlaufen, um so die Magnete auf ein definiertes Maß aus der Führungsschiene herauszuziehen.

### Bezugszeichenliste

- 1: Linearantrieb
- 2: Halterung
- 3: Führungsschiene
- 4: Führungsschlitten
- 5: Schiebetür
- 6: Profil
- 7: Spule
- 8: Kontaktschiene
- 9: Justiereinrichtung
- 10: Tragschiene
- 11: Nut
- 12: Halteelement
- 13: Magnet
- 14: Halter
- 15: Sockel
- 16: Verbindungselement
- 17: Aufnahme
- 18: Tasche
- 19: Leiste
- 20: Deckel
- 21: Abstandsleiste
- 22: Einschub
- 23: Durchgangsbohrung
- 24: Schuh
- 25: Lasche
- 26: Befestigungsplatte
- 27: Justierschlitz
- 28: Langloch
- 29: Welle
- 30: Vierkant
- 31: Schwenkarm
- 32: Aufnahmeöffnung
- 33: Nocken
- 34: Halteschraube
- 35: Sicherungsbolzen
- 36: Längsnut
- 37: Winkelträger
- 38: Exzenterwelle
- 39: Schenkel
- 40: Langloch
- 41: Schenkel
- 42: Langloch
- 43: Schlitz
- 44: Aufnahmenut
- 45: Wellenstummel
- 46: Nocken
- 47: Eingriffsöffnung
- 48: Spulenhalter
- 49: Basisplatte
- 50: Abstandhalter
- 51: Grundplatte
- 52: Anschlussfahne
- 53: Stützrolle
- 54: Lagerwelle
- 55: Bohrung
- 56: Rolle
- 57: Führungsbahn

## Patentansprüche

1. Linearantrieb (1), aufweisend stationäre, in Reihe angeordnete Spulen (7), die auf mindestens einen beweglichen Magneten (13) einwirken,
• die Spulen (7) jeweils in einem Spulenhalter (48) gelagert sind,
• wobei jede Spule (7) mit Anschlüssen (52) versehen ist,
• wobei die Lage der Anschlüsse (52) einer ersten Spule (7) bezüglich der Lage der Anschlüsse (52) einer weiteren Spule (7) derart unterschiedlich ausgerichtet ist, dass die Anschlüsse (52) in Längsrichtung der Reihe von Spulen (7) alternierend gegeneinander um 90° verdreht sind
**dadurch gekennzeichnet, dass**
• die Anschlüsse (52) als Anschlussfahnen (52) ausgebildet sind und
• eine Kontaktschiene (8) vorgesehen ist, die mindestens zwei mit den Anschlussfahnen (52) in Kontakt kommende Leiterbahnen aufweist,
• wobei die Kontaktschiene (8) auf die Spulenhalter (48) aufschiebbar ist.

2. Linearantrieb (1) nach Anspruch 1, wobei die Spulen (7) in unterschiedlichen Stellungen in dem jeweiligen Spulenhalter (48) einsetzbar sind.

3. Linearantrieb (1) nach Anspruch 1 oder 2, wobei die Spulen (7) um ihre Achse drehbar in dem jeweiligen Spulenhalter (48) gehalten sind.

4. Linearantrieb (1) nach einem der vorhergehenden Ansprüche, wobei die Kontaktschiene (8) die Spulen (7) und die Spulenhalter (48) abdeckt.

5. Linearantrieb (1) nach einem der vorhergehenden Ansprüche, wobei die Enden aller Anschlussfahnen (52) in die gleiche Richtung weisen.

6. Linearantrieb (1) nach einem der vorhergehenden Ansprüche, mit dem eine Schiebetür (5) verbunden ist.

## Claims

1. A linear drive (1), comprising stationary coils (7) disposed in a row, which act upon at least one movable magnet (13),
• wherein the coils (7) are supported in one coil holder (48) each,
• wherein each coil (7) is provided with terminals (52),
• wherein the orientation of the terminals (52) of a first coil (7) with regard to the orientation of the terminals (52) of another coil (7) is different in that the terminals (52) are alternatingly rotated by 90° with regard to each other in the longitudinal direction of the row of coils (7),
**characterized in that**
• the terminals (52) are configured as terminal lugs (52), and
• a contact rail (8) is provided which has at least two conductor tracks getting in contact with the terminal lugs (52),
• wherein the contact rail (8) can be slipped onto the coil holder (48).

2. A linear drive (1) according to claim 1, wherein the coils (7) are insertable in different positions into the respective coil holder (48).

3. A linear drive (1) according to claim 1 or 2, wherein the coils (7) are retained in the respective coil holder (48) to be rotatable about their axis.

4. A linear drive (1) according to any of the preceding claims, wherein the contact rail (8) covers the coils (7) and the coil holders (48).

5. A linear drive (1) according to any of the preceding claims, wherein the ends of all terminal lugs (52) point into the same direction.

6. A linear drive (1) according to any of the preceding claims, to which a sliding door (5) is connected.

## Revendications

1. Entraînement linéaire (1), comportant des bobines (7) stationnaires agencées en série, qui agissent au moins sur un aimant (13) mobile,
• les bobines (7) étant respectivement logées dans un support à bobine (48),
• chaque bobine (7) étant pourvue de connexions (52),
• l'orientation des connexions (52) d'une première bobine (7) par rapport à l'orientation des connexions d'une autre bobine (7) étant différente dans la mesure que les connexions (52) en direction longitudinale de la série de bobines (7) sont tournées de 90° de façon alternante les unes par rapport aux autres,
**caractérisé en ce que**
• les connexions (52) sont aménagés comme barrettes (52), et
• qu'un rail de contact (8) est prévu, qui présente au moins deux pistes conductives établissant un contact avec les barrettes (52),
• le rail de contact (8) pouvant être glissé sur le support à bobine (48).

2. Entraînement linéaire (1) selon la revendication 1, dans lequel les bobines (7) peuvent être insérées dans des positions différentes dans le support à bobines (48) respectif.

3. Entraînement linéaire (1) selon la revendication 1 ou 2, dans lequel les bobines (7) sont maintenues dans le support à bobines (48) respectif de façon à pouvoir tourner autour de leur axe.

4. Entraînement linéaire (1) selon l'une des revendications précédentes, dans lequel le rail de contact (8) recouvre les bobines (7) et les supports à bobines (48).

5. Entraînement linéaire (1) selon l'une des revendications précédentes, dans lequel les extrémités de toutes les barrettes (52) indiquent la même direction.

6. Entraînement linéaire (1) selon l'une des revendications précédentes, auquel une porte coulissante (5) est connectée.
